# FASCICULE DE BREVET EUROPEEN

(11) **EP 0 522 900 B1**
(45) Date de publication et mention de la délivrance du brevet: **31.01.1996**
(21) Numéro de dépôt: 92401647.0
(22) Date de dépôt: 15.06.1992
(51) Int. Cl.: C04B 30/02, C04B 35/80, C04B 35/10

(54) **Procédé d'élaboration de pièces en matériau composite à matrice alumine**
Verfahren zur Herstellung von Gegenständen aus einem Verbundwerkstoff mit Aluminiumoxidmatrix
Method for the production of composite articles with an alumina matrix

(30) Priorité: 17.06.1991 FR 9107393
(43) Date de publication de la demande: 13.01.1993
(73) Titulaire: SOCIETE EUROPEENNE DE PROPULSION, F-92150 Suresnes (FR)
(72) Inventeur: Astier, Jean-Pierre, F-33600 Pessac (FR); Bertone, Christian, F-33480 Castelnau de Medoc (FR); Rocher, Jean-Philippe, F-33165 Le Haillan (FR)
(74) Mandataire: Joly, Jean-Jacques

(56) Documents cités:
- EP-A- 0 130 105
- FR-A- 2 526 785
- FR-A- 2 589 855
- US-A- 4 814 127
- US-A- 4 983 422

## Description

La présente invention concerne l'élaboration de pièces en matériau composite comprenant une texture de renfort fibreuse densifiée par une matrice en alumine.

Il existe plusieurs techniques de densification d'une texture fibreuse par une matrice en alumine, en particulier des techniques utilisant la voie liquide.

Un procédé connu consiste à réaliser des imprégnations successives de la texture fibreuse par une composition liquide constituant un précurseur de l'alumine. Chaque imprégnation est suivie par un séchage et un traitement thermique pour convertir le précurseur en alumine. Ce procédé a pour inconvénient d'être long et coûteux à mettre en oeuvre. En effet, il est généralement nécessaire de procéder à de nombreux cycles consécutifs d'imprégnation séchage-traitement thermique pour atteindre le degré de densification souhaité.

Un autre procédé connu, décrit notamment dans le document FR-A-2 526 785, consiste à introduire par aspiration à travers la texture fibreuse une poudre très fine d'alumine en suspension dans un liquide. Après infiltration de la poudre d'alumine, il est procédé à un séchage et un traitement thermique de frittage. Cette technique d'aspiration de poudre n'est applicable qu'à la réalisa tion de pièces de dimensions limitées et de formes simples. En outre, les grains d'alumine dans la matrice ne sont que faiblement liés entre eux.

Dans le document FR-A-2 091 419, il est décrit un procédé comprenant l'imprégnation de zircone fibreuse par un liquide contenant une poudre de zircone et un précurseur liquide de zircone. La zircone fibreuse ainsi imprégnée est déposée sur une pièce métallique revêtue d'un émail de porcelaine, et le tout est séché et chauffé. Une fois ces opérations effectuées, on obtient une pièce métallique revêtue de zircone pouvant être utilisée avec succès dans des milieux chauds et corrosifs, le procédé utilisé procurant une bonne liaison métal-céramique.

Une autre technique est décrite dans le document EP-A-0 130 105. Elle consiste tout d'abord à imprégner une texture tridimensionnelle (3D) en fibres réfractaires par une suspension de poudre céramique dans un liquide contenant une très faible quantité d'une résine (alcool polyvinylique). Après séchage, les grains de céramique occupent les pores les plus gros de la texture 3D (remplissage de la macroporosité). De façon à densifier totalement le matériau, l'ensemble texture 3D-grains de céramique est imprégné à l'aide d'un précurseur liquide d'une céramique de façon à remplir les microporosités. Le tout est ensuite traité thermiquement pour transformer le précurseur liquide en céramique et éliminer la résine. Les dernières opérations d'imprégnation et de traitement thermique sont répétées plusieurs fois. Ce procédé permet une densification relativement rapide d'une texture fibreuse 3D, sans utiliser de pression.

La présente invention a pour but de fournir un procédé amélioré permettant la densification par voie liquide d'une texture de renfort fibreuse par une matrice alumine.

Ce but est atteint grâce à un procédé comprenant une étape d'imprégnation de la texture fibreuse par une composition fluide contenant un précurseur de l'alumine et une étape ultérieure de conversion du précurseur en alumine par traitement thermique de procédé selon lequel, conformément à l'invention, la texture fibreuse est imprégnée par une composition comprenant le précurseur de l'alumine, une résine thermoplastique et de la poudre d'alumine en suspension.

La poudre d'alumine est une poudre très fine, de préférence submicronique.

La résine thermoplastique faisant fonction de liant est choisie pour ne laisser pratiquement pas de résidu solide après traitement thermique. A titre d'exemple, on peut choisir pour cette résine fugitive un polyméthacrylate, tel que le polymétacrylate de méthyle (PMMA).

Par rapport au procédé connu consistant à réaliser des imprégnations successives de la texture fibreuse par une composition liquide constituant un précurseur de la matrice, le procédé conforme à l'invention présente l'avantage de permettre une densification beaucoup plus rapide. Il est donc nettement moins long et coûteux.

Par rapport au procédé connu consistant à aspirer à travers la texture une poudre d'alumine en suspension dans un liquide, le procédé conforme à l'invention ne présente pas de limitation quant aux dimensions et formes des pièces à réaliser. Il permet en outre l'obtention de matériaux présentant une porosité plus réduite.

L'adjonction du précurseur de l'alumine et de la résine thermoplastique à la poudre d'alumine est essentielle pour réaliser la liaison entre les grains de poudre d'alumine dans la matrice.

A cet égard, il a été observé que la seule présence du précurseur liquide d'alumine avec la poudre d'alumine est insuffisante car elle conduit à un composite avec une matrice "délaminée", sans réelle cohésion. La présence supplémentaire de résine thermoplastique est absolument nécessaire, en dépit de sa nature fugitive, qui fait qu'elle a disparu dans le matériau final.

La résine thermoplastique doit donc être présente en quantité significative. De préférence, le pourcentage en poids de la résine dans la composition d'imprégnation est au moins égal à 5 %.

La composition du mélange d'imprégnation est de préférence la suivante :
- précurseur liquide d'alumine, entre 80 et 120 parties en poids,
- résine thermoplastique, entre 5 et 20 parties en poids, et
- charges solides, entre 60 et 100 parties en poids.

Les charges solides sont constituées totalement ou essentiellement par la poudre d'alumine. Les autres charges qui peuvent éventuellement être présentes pour conférer des propriétés particulières au matériau composite, sont par exemple des charges magnétiques (poudre de ferrite), une poudre céramique (par exemple du nitrure de silicium) ou des wiskers en céramique.

Selon un mode préféré de mise en oeuvre de l'invention, la texture fibreuse imprégnée est formée par drapage et moulage de strates préimprégnées par une composition comprenant un précurseur d'alumine, une résine thermoplastique et de la poudre d'alumine en suspension.

La résine thermoplastique permet d'assurer une très bonne liaison entre les strates préimprégnées, donnant au matériau obtenu la cohésion nécessaire.

Il est possible d'imprégner les strates constituant des couches différentes de la texture par des compositions d'imprégnation qui diffèrent les unes des autres par la proportion de charges solides supplémentaires introduites dans la composition d'imprégnation. Ainsi, la répartition des charges dans le matériau composite obtenu peut être contrôlée, en particulier pour obtenir un gradient prédéterminé de charges dans le composite.

Des exemples particuliers de mise en oeuvre de l'invention seront décrits ci après à titre indicatif, mais non limitatif.

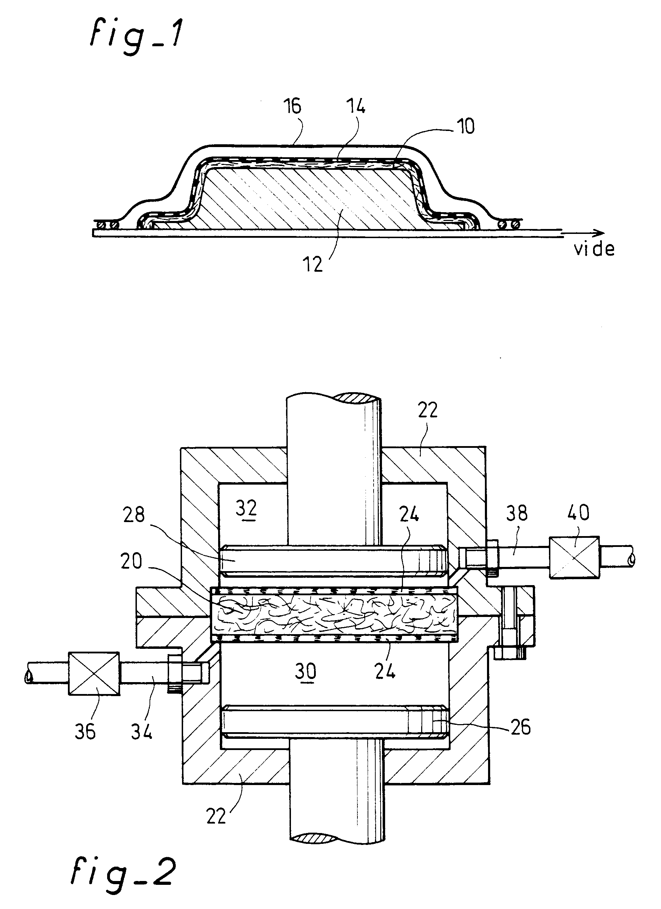

Les figures 1 et 2 du dessin annexé illustrent très schématiquement deux modes de mise en oeuvre du procédé conforme à l'invention.

Le domaine d'application de l'invention est celui des matériaux composites à texture de renfort fibreuse et matrice en alumine. Il s'agit plus particulièrement des matériaux composites réfractaires dont non seulement la matrice, mais aussi la texture de renfort fibreuse sont réfractaires, notamment céramiques. A titre d'exemples, les fibres de la texture de renfort sont en carbure de silicium, ou en alumine, donnant par conséquent des matériaux composites de type SiC/Al₂O₃ ou Al₂O₃/Al₂O₃.

La texture de renfort est formée par drapage de strates bidimensionnelles, par exemple des strates formées de tissu, de voile de fibres ou feutre, ou encore de nappe de fils ou câbles, ou est formée par une texture tridimensionnelle, par exemple un mat, un feutre, ...

### Exemple 1

Dans cet exemple, la texture de renfort est formée à partir de strates de tissu de fibres de carbure de silicium (tissu SiC), en l'espèce des fibres produites sous la dénomination "Nicalon" par la société japonaise Nippon Carbon.

Une composition d'imprégnation est préparée avec les constituants suivants :
- 57 % en poids de précurseur liquide d'alumine constitué par de l'oxychlorure d'aluminium ;
- 34 % en poids de poudre submicronique d'alumine, et
- 9 % en poids de résine fugitive constituée par du polyméthacrylate de méthyle (PMMA).

La composition d'imprégnation est malaxée pendant au moins 24 h de façon à obtenir un mélange homogène, avant d'être utilisée pour imprégner le tissu SiC.

Le tissu préimprégné est séché, par exemple par passage dans un tunnel chaud.

Une préforme d'une pièce composite est réalisée par drapage de strates de tissu SiC préimprégné sec et moulage en autoclave, selon une technique bien connue.

Comme le montre la figure 1, les strates de tissu préimprégné 10 sont drapées sur un outillage 12 ayant la forme de la pièce à fabriquer. Les strates 10 sont maintenues sur l'outillage au moyen d'une tôle rigide perforée 14 elle même recouverte par une enveloppe souple étanche 16. Celle-ci forme un sac à l'intérieur duquel une dépression ou une surpression peut être établie par raccordement à une source de vide ou de pression (non représentée).

Un cycle de cuisson lors de l'opération de moulage est réalisé en faisant croître la température progressivement jusqu'à 250-300° C. Au cours de cette montée en température, il se produit un ramollissement de la résine thermoplastique, qui est mêlée intimement aux charges et au précurseur liquide d'alumine. Ce ramollissement (couplé à l'application d'une dépression ou de pressions élevées) va permettre une bonne liaison avec imbrication des strates de préimprégnés entre elles.

Ensuite, vers 180° C, le précurseur liquide d'alᵤmᵢne (oxychlorure d'aluminium) se transforme en alumine hydratée. Au cours de cette transformation, l'imbrication des strates ainsi que les liaisons entre elles continuent d'être assurées par la résine.

Vers 250-300° C, la transformation de l'oxychlorure d'aluminium en alumine hydratée est achevée. Les strates de tissu préimprégné sont alors bien liées entre elles et la pièce ainsi moulée présente une bonne tenue.

La pièce obtenue est alors sortie de l'autoclave et est portée à 850° C dans un four sous pression atmosphérique afin de pyrolyser la résine (qui n'est plus nécessaire au maintien de la pièce) et déshydrater l'alumine.

La pièce ainsi réalisée présente alors une porosité résiduelle de 30 %. Pour achever sa densification, elle est ensuite imprégnée (hors outillage) 3 à 4 fois avec le précurseur liquide d'alᵤmᵢne utilisé précédemment (oxychlorure d'alumimiun). Après chaque imprégnation, un cycle de cuisson à 250° C et un cycle de pyrolyse jusqu'à 850° C sont effectués.

Une fois ces opérations achevées, on obtient une pièce en matériau composite SiC/Al₂O₃ présentant une porosité ouverte résiduelle inférieure à 15 % et dans laquelle les strates du renfort fibreux sont bien liées entre elles.

### Exemple comparatif 1

Un tissu préimprégné est obtenu en imprégnant le même tissu que celui utilisé dans l'exemple 1 avec une composition contenant :
- 62,5 % en poids de précurseur liquide d'alumine (oxychlorure d'aluminium),
- 37,5 % en poids de poudre submicronique d'alumine.

Il est à noter que les pourcentages d'oxychlorure et de charges sont dans le même rapport que dans la composition d'imprégnation de l'exemple 1.

Après séchage du tissu préimprégné, ce dernier est découpé en strates qui sont moulées en autoclave jusqu'à 300° C comme décrit dans l'exemple 1.

Après sortie de l'autoclave, la pièce n'est pas manipulable ; les strates de tissu la constituant n'ayant aucune tenue entre elles (délaminage).

Ce phénomène est dû à l'absence de résine thermoplastique dans la composition d'imprégnation, ce qui a empêché la bonne imbrication des strates de tissu préimprégné lors du moulage et leur maintien entre elles au moment de la transformation de l'oxychlorure d'aluminium en alumine hydratée.

### Exemple comparatif 2

Un tissu préimprégné est obtenu en imprégnant le même tissu que celui utilisé dans l'exemple 1 avec une composition contenant :
- 86 % en poids de précurseur liquide d'alumine constitué par de l'oxychlorure d'aluminium,
- 14 % en poids de résine thermoplastique (PMMA).

Il est à noter que les pourcentages d'oxychlorure et de résine sont dans le même rapport que dans la composition d'imprégnation de l'exemple 1.

Une pièce est ensuite fabriquée à partir de ce tissu préimprégné par moulage à l'autoclave jusqu'à 250° C à 300° C, puis pyrolyse dans un four sous pression atmosphérique jusqu'à 850° C, comme dans l'exemple 1.

La pièce ainsi réalisée présente alors une porosité résiduelle comprise entre 40 et 45 %. Pour achever sa densification, jusqu'à atteindre une porosité résiduelle inférieure à 15 %, il faut réaliser 7 à 8 cycles d'imprégnation par le précurseur liquide d'alumine (oxychlorure d'aluminium) déjà utilisé pour réaliser le tissu préimprégné ; chaque imprégnation étant suivie d'un cycle de cuisson à 250° C et d'un cycle de pyrolyse jusqu'à 850° C, comme dans l'exemple 1.

Il est à noter que pour atteindre un même stade de densification que dans l'exemple 1, il est nécessaire d'effectuer 2 fois plus de réimprégnations par l'oxychlorure d'aluminium, ce qui allonge considérablement le temps de fabrication.

### Exemple comparatif 3

Un tissu préimprégné est obtenu en imprégnant le même tissu que celui utilisé dans l'exemple 1 avec une composition contenant :
- 50 % en poids de poudre submicronique d'Al₂O₃,
- 5 % en poids de résine thermoplastique fugitive type alcool polyvinylique,
- 5 % d'agent défloculant basique, et
- 40 % d'eau.

Ce tissu préimprégné est ensuite mis en oeuvre comme décrit dans l'exemple 1 par pressage à l'autoclave.

Après pressage, on constate qu'aucun lien n'existe entre les strates de tissu préimprégné et que la pièce obtenue n'a aucune tenue.

Cette composition du type de celles décrites dans le document EP-A-0 130 105 s'avère par conséquent inapte à la réalisation de pièces par moulage de strates de tissu préimprégné.

### Exemple 2

Une pièce est réalisée comme décrit dans l'exemple 1 à l'exception du fait que le tissu de fibres de carbure de silicium est remplacé par un tissu de fibres d'alumine (Al₂O₃) commercialisé par la société SUMITOMO. La pièce composite en Al₂O₃/Al₂O₃ ainsi obtenue présente de hautes caractéristiques thermomécaniques, ainsi qu'une émissivité faible (comprise entre 0,3 et 0,4) pour des longueurs d'onde de 3,5 à 10 microns et pour des températures de 600-1000° C.

### Exemple 3

Une pièce est réalisée comme suit :
- un tissu de fibres d'Al₂O₃ commercialisé par la société SUMITOMO est imprégné avec une composition d'imprégnation contenant 57 % en poids d'oxychlorure d'aluminium, 34 % en poids de poudre submicronique d'alumine et 9 % en poids de polyméthacrylate de méthyle (préimprégné 1)
- un même tissu de fibres d'alumine commercialisé par la société SUMITOMO est imprégné avec une composition d'imprégnation contenant 57 % en poids d'oxychlorure d'aluminium, 34 % en poids de poudre submicronique de nitrure de silicium (Si₃N₄) et 9 % de PMMA (préimprégné 2)
- les deux tissus préimprégnés ainsi réalisés sont ensuite séchés, et des strates de 100 x 100 mm y sont découpées.
- 10 strates de préimprégné 1 sont ensuite empilées et sur cet empilement est placée une strate de préimprégné 2
- l'ensemble est ensuite moulé en autoclave et pyrolysé comme décrit dans l'exemple 1.

Le matériau ainsi obtenu est identique à celui de l'exemple 5, à l'exception du fait que la strate supérieure de ce matériau contient 34 % en poids de Si₃N₄ au lieu de 34 % en poids d'alumine.

Les caractéristiques mécaniques en traction de ces matériaux sont identiques. Par contre, le matériau élaboré comme décrit dans cet exemple 6 présente une émissivité supérieure à celle du matériau de l'exemple 5.

### Exemple 4

Une pièce en composite Al₂O₃/Al₂O₃ est réalisée comme suit :
- un tissu de fibres d'Al₂O₃ commercialisé par la société SUMITOMO est imprégné avec une composition contenant 57 % en poids d'oxychlorure d'aluminium, 34 % en poids de poudre submicronique d'alumine et 9 % en poids de PMMA (préimprégné A)
- un même tissu de fibres Al₂O₃ est imprégné avec une composition contenant 57 % en poids d'oxychlorure d'aluminium, 32 % en poids de poudre submicronique d'alumine, 2 % en poids de poudre de graphite et 9 % en poids de PMMA (préimprégné B),
- un même tissu de fibres Al₂O₃ est imprégné avec composition contenant, en poids, 57 % d'oxychlorure d'aluminium, 30 % de poudre submicronique d'alumine, 4 % de poudre de graphite et 9 % de PMMA (préimprégné C),
- un même tissu de fibres Al₂O₃ est imprégné avec une composition contenant, en poids : 57 % d'oxychlorure d'aluminium, 28 % de poudre submicronique d'alumine, 6 % de poudre de graphite et 9 % de PMMA (préimprégné D)
- les quatre préimprégnés ainsi réalisés sont séchés et des strates de 100 x 100 mm sont découpées dans ces tissus préimprégnés.
- l'empilement suivant est ensuite réalisé :
   4 strates de préimprégné A
   4 " " " B
   4 " " " C
   4 " " " D
- l'ensemble est ensuite moulé à 250° C sous presse et pyrolysé à 850° C sous atmosphère inerte.

Le matériau ainsi obtenu présente des caractéristiques mécaniques en traction identiques à celles du composite réalisé dans l'exemple 5.

Par contre, le gradient de charges graphite obtenu au sein du matériau transforme le composite Al₂O₃/Al₂O₃ de l'exemple 5 (matériau transparent aux ondes radar), en un matériau absorbant les ondes radar. Par rapport à un matériau réflecteur, on observe à 10 GHz une atténuation de 10 dB. Cette technique, qui permet l'incorporation d'un gradient de charges graphite, conduit à l'obtention de composite à matrice céramique à hautes performances présentant des caractéristiques intéressantes d'un point de vue discrétion vis-à-vis des ondes radar.

C'est une caractéristique du procédé selon l'invention que de permettre un contrôle de charges incorporées au matériau de façon à lui conférer des propriétés particulières (émissivité, discrétion radar, ...).

### Exemple 5

Cet exemple se rapporte à la fabrication d'un radôme en matériau composite Al₂O₃/Al₂O₃. La texture de renfort est constituée par un mat de fibres d'alumine commercialisé par la société ICI sous la dénomination met "Saffil".

Comme le montre la figure 2, la texture de renfort 20, en forme de disque, est placée dans une enceinte 22, entre deux tamis 24 constitués par des tôles perforées. Des pistons 26, 28 coulissent dans des chambres 30, 32 délimitées par l'enceinte 22 et la texture 20, de chaque côté de celle-ci. Une conduite 34 d'admission de composition d'imprégnation munie d'une vanne d'arrêt 36 aboutit dans une des chambres, par exemple la chambre 30, à travers la paroi de l'enceinte, à proximité immédiate de l'emplacement de la texture 20. Une conduite d'aspiration 38 munie d'une vanne d'arrêt 40 et raccordée à une source de vide (non représentée) aboutit dans l'autre chambre 32, à proximité immédiate de l'emplacement de la texture 20, à travers la paroi de l'enceinte dans une zone de celle ci opposée à celle où débouche la conduite 34.

Une composition d'imprégnation est préparée avec les constituants suivants :
- 100 parties en poids de précurseur liquide d'alumine constitué par de l'oxychlorure d'aluminium,
- 70 parties en poids de poudre submicronique d'alumine,
- 15 parties en poids de résine thermoplastique constituée par du polyméthacrylate de méthyle.

Après mise en place de la texture de renfort 20 avec les tamis 24, le vide est établi dans l'enceinte, la vanne 36 étant fermée et la vanne 40 ouverte. Ensuite, la vanne 36 est ouverte pour admettre dans la chambre 30 de l'enceinte une quantité déterminée de la composition d'imprégnation. Celle ci est forcée à traverser la texture de renfort 20 par la dépression qui continue à être exercée dans la chambre 32.

Au bout d'un temps prédéterminé suffisant pour que l'ensemble de la texture 20 ait été traversé par la composition d'imprégnation, la vanne 40 est fermée.

Les pistons 26, 28 sont alors mus en synchronisme pour forcer la composition d'imprégnation à traverser plusieurs fois la texture de renfort 20 dans un sens et dans l'autre. De la sorte, une imprégnation homogène de la texture est réalisée.

La texture de renfort imprégnée, maintenue entre les tamis 24, est extraite de l'enceinte pour être soumise à un cycle de cuisson. Celui ci, comme précédemment, consiste à placer la texture de renfort sous presse ou dans un autoclave et à élever la température jusqu'à environ 250 à 300°C de façon progressive et avec des paliers intermédiaires.

Un cycle de céramisation est réalisé dans un four où la température est élevée progressivement jusqu'à 950°C, permettant d'obtenir le radôme en matériau composite Al₂O₃/Al₂O₃ recherché, après stabilitation à 1400°C.

Le matériau obtenu présente ainsi les caractéristiques électromagnétiques désirées (permittivité réelle, tangente de perte, ...) de façon reproductible.

### Exemple comparatif 4

Un radôme est réalisé comme décrit dans l'exemple 5 à l'exception de la composition d'imprégnation qui ne contient pas de polyméthacrylate, et dans laquelle les pourcentages d'oxychlorure d'aluminium et de poudre submicronique d'alumine sont dens le même rapport que dans l'exemple 5.

Le matériau ainsi obtenu présente des délaminages interstrates comme ceci a été vu précédemment (exemple comparatif 1) pour les matériaux à matrice alumine avec renfort bidirectionnel en tissu.

En outre, les caractéristiques électromagnétiques du matériau ne sont pas reproductibles en raison d'un gradient de charges ainsi que d'un pourcentage global de charges variant d'un matériau composite à l'autre ainsi qu'au sein du même composite.

Ceci est dû au fait qu'en l'absence de résine thermoplastique, les charges fluent de façon non reproductible lors du pressage à chaud.

## Revendications

1. Procédé d'élaboration de pièce en matériau composite comprenant une texture de renfort fibreuse densifiée par une matrice alumine, comprenant une étape d'imprégnation de la texture fibreuse par une composition fluide contenant un précurseur liquide de l'alumine et une étape ultérieure de conversion du précurseur en alumine,
caractérisé en ce que la texture fibreuse est imprégnée par une composition comprenant le précurseur liquide d'alumine, une résine thermoplastique et de la poudre d'alumine en suspension.

2. Procédé selon la revendication 1, caractérisé en ce que la proportion en poids de résine thermoplastique dans la composition d'imprégnation est au moins égale à 5 %.

3. Procédé selon la revendication 1, caractérisé en ce que les constituants de la composition d'imprégnation sont présents dans les proportions en poids suivantes :
précurseur d'alumine : entre 80 et 120 parties en poids
poudre d'alumine : entre 60 et 100 parties en poids
résine thermoplastique : entre 5 et 20 parties en poids.

4. Procédé selon l'une quelconque des revendications 1 à 3, caractérisé en ce que des charges solides supplémentaires sont ajoutées à la composition d'imprégnation.

5. Procédé selon l'une quelconque des revendications 1 à 4, caractérisé en ce que, la texture fibreuse imprégnée est réalisée par drapage et moulage de strates préimprégnées par une composition contenant le précurseur liquide d'alumine, la résine thermoplastique et de la poudre d'alumine.

6. Procédé selon la revendication 5, caractérisé en ce que les strates constituant des couches différentes de la texture de renfort sont imprégnées par des compositions d'imprégnation respectives qui diffèrent les unes des autres par la proportion de charges solides supplémentaires qui y sont introduites.

7. Procédé selon la revendication 6, caractérisé en ce que les proportions de charges introduites dans les compositions d'imprégnation et la disposition des strates préimprégnées sont déterminées de manière à obtenir un gradient de charges prédéterminé au sein du matériau composite.

8. Procédé selon l'une quelconque des revendications 1 à 4, caractérisé en ce que la texture fibreuse est placée dans une enceinte dans laquelle la composition d'imprégnation est admise et est forcée à passer à travers la texture fibreuse dans un sens et dans l'autre.

9. Procédé selon l'une quelconque des revendications 1 à 8, caractérisé en ce que, postérieurement au traitement thermique de conversion du précurseur en alumine, il est procédé à au moins un cycle comprenant une imprégnation par un précurseur liquide de l'alumine et un traitement thermique.

10. Procédé selon l'une quelconque des revendications 1 à 9, caractérisé en ce que la texture de renfort est en fibres céramiques.

## Claims

1. Method of making a part of composite material comprising a fiber reinforcing texture densified by an alumina matrix, comprising a step of impregnating the fiber texture with a fluid composition containing a liquid precursor of alumina, and a subsequent step of converting the precursor into alumina, characterized in that the fiber texture is impregnated by a composition comprising the liquid precursor of alumina, a thermoplastic resin, and alumina powder in suspension.

2. Method according to claim 1, characterized in that the proportion by weight of the thermoplastic resin in the impregnation composition is at least equal to 5 %.

3. Method according to claim 1, characterized in that the ingredients of the impregnation composition are present in the following proportions by weight:
alumina precursor 80 parts to 120 parts by weight;
alumina powder: 60 parts to 100 parts by weight; and
thermoplastic resin 5 parts to 20 parts by weight.

4. Method according to any one of claims 1 to 3, characterized in that additional solid fillers are added to the impregnation composition.

5. Method according to any one of claims 1 to 4, characterized in that the impregnated fiber texture is made by draping and molding plies that are preimpregnated with a composition containing the liquid precursor of alumina, the thermoplastic resin, and the alumina powder.

6. Method according to claim 5, characterized in that the plies making up different layers of the reinforcing texture are impregnated with respective impregnation compositions that differ from one another in the proportion of additional solid fillers introduced therein.

7. Method according to claim 6, characterized in that the proportions of filler introduced in the impregnation compositions, and the disposition of the preimpregnated plies are determined so as to obtain a predetermined filler gradient through the composite material.

8. Method according to any one of claims 1 to 4, characterized in that the fiber texture is placed in an enclosure into which the impregnation composition is admitted and is forced to pass through the fiber texture in one direction and in the opposite direction.

9. Method according to any one of claims 1 to 8, characterized in that after the heat treatment for converting the precursor into alumina, at least one cycle is performed comprising impregnation with a liquid precursor of alumina and heat treatment.

10. Method according to any one of claims 1 to 9, characterized in that the reinforcing texture is made of ceramic fibers.

## Patentansprüche

1. Verfahren zur Herstellung eines Gegenstandes aus einem Verbundwerkstoff, der eine Faserverstärkungsstruktur hat, die durch eine Aluminiumoxidmatrix verstärkt ist, umfassend eine Imprägnierungsphase der Faserstruktur durch eine flüssige Zusammensetzung, die einen flüssigen Aluminiumoxidprecursor enthält und eine weitere Phase zur Umwandlung des Precursors in Aluminiumoxid,
**dadurch gekennzeichnet, daß**
die Faserstruktur mit einer Zusammensetzung imprägniert wird, die den flüssigen Aluminiumoxidprecursor, ein thermoplastisches Harz und Aluminiumoxidpulver in Suspension enthält.

2. Verfahren nach Anspruch 1,
**dadurch gekennzeichnet, daß**
der Gewichtsanteil an thermoplastischen Harz in der Imprägnierungszusammensetzung wenigsten gleich 5 % ist.

3. Verfahren nach Anspruch 1,
**dadurch gekennzeichnet, daß**
die Bestandteile der Imprägnierungszusammensetzung in den folgenden Gewichtsanteilen vorhanden sind: Aluminiumoxidprecursor: zwischen 80 und 120 Gewichtsteile; Aluminiumoxidpulver: zwischen 60 und 100 Gewichtsteile; thermoplastisches Harz: zwischen 5 und 10 Gewichtsteilen.

4. Verfahren nach einem der Ansprüche 1 - 3,
**dadurch gekennzeichnet, daß**
daß zusätzliche Feststoffzusätze der Imprägnierungszusammensetzung zugefügt werden.

5. Verfahren nach einem der Ansprüche 1 - 4,
**dadurch gekennzeichnet, daß**
die imprägnierte Faserstruktur durch Strecken und Formen vorimprägnierter Schichten mittels einer Zusammensetzung hergestellt wird, die den flüssigen Aluminiumoxidprecursor, das thermoplastische Harz und das Aluminiumoxidpulver enthält.

6. Verfahren nach Anspruch 5,
**dadurch gekennzeichnet, daß**
die aus unterschiedlichen Lagen der Verstärkungsstruktur bestehenden Schichten mit jeweiligen Imprägnierungszusammensetzungen imprägniert werden, die voneinander durch das Verhältnis der zusätzlichen Feststoffzusätze, die ihnen beigefügt werden, verschieden sind.

7. Verfahren nach Anspruch 6,
**dadurch gekennzeichnet, daß**
die Anteile der eingebrachten Zusatzstoffe in die Imprägnierungszusammensetzung und die Anordnung der vorimprägnierten Schichten derart bestimmt werden, daß ein bestimmter Zusatzstoffgradient innerhalb des Verbundwerkstoffes erhalten wird.

8. Verfahren nach einem der Ansprüche 1 - 4,
**dadurch gekennzeichnet, daß**
die Faserstruktur in ein Gehäuse eingesetzt wird, in die Imprägnierungszusammensetzung eingebracht und durch die Faserstruktur in der einen und der anderen Richtung gedrückt wird.

9. Verfahren nach einem der Ansprüche 1 - 8,
**dadurch gekennzeichnet, daß**
nach der thermischen Behandlung zur Umwandlung des Precursors in Aluminiumoxid wenigstens ein Zyklus durchgeführt wird, der eine Imprägnierung mittels eines flüssigen Precursors aus Aluminiumoxid und eine thermische Behandlung umfaßt.

10. Verfahren einem der Ansprüche 1 - 9,
**dadurch gekennzeichnet, daß**
die Verstärkungsstruktur aus Keramikfasern besteht.
